# EUROPEAN PATENT APPLICATION

(11) **EP 2 525 581 A2**
(43) Date of publication of application: **21.11.2012**
(21) Application number: 11189968.8
(22) Date of filing: 21.11.2011
(51) Int. Cl.: H04N 13/02

(54) **Apparatus and Method for Converting 2D Content into 3D Content, and Computer-Readable Storage Medium Thereof**

(30) Priority: 17.05.2011 KR 20110046349
(71) Applicant: Samsung Electronics Co., Ltd., Suwon-si, Gyeonggi-do, 443-742 (KR)
(72) Inventor: Kwon, Oh-yun, Seoul (KR)
(74) Representative: Clark, David James

(57) **Abstract**

Provided are an apparatus and a method for converting 2D contents into 3D contents, and a computer-readable medium thereof. The method of converting 2D contents into 3D contents through a content converting apparatus includes: determining a quality of 3D contents to be converted from 2D contents that are video contents and include a plurality of frames; extracting an object from a frame among the plurality of frames; assigning depth to the extracted object; and performing rendering for conversion into 3D contents on the frame having the object assigned with the depth, wherein at least one of the extracting the object, the assigning the depth, and the performing the rendering is performed in accordance with the determined quality of 3D contents. Accordingly, it is possible to provide 3D contents having a variety of quality catering to user's tastes.

## Description

### BACKGROUND

### 1. Field

Apparatuses and methods consistent with exemplary embodiments relate to an apparatus and method for converting contents, and a computer-readable medium thereof, and more particularly to an apparatus and method for converting two-dimensional (2D) contents into three-dimensional (3D) contents, and a computer-readable medium thereof.

### 2. Description of the Related Art

Video contents such as movies, dramas, sports, etc., are reproduced in a television, a personal computer, a smart phone, a smart pad, a portable multimedia player (PMP), an MP3 player, or the like display apparatus capable of reproducing contents.

With recent developments of display technologies for a three-dimensional (3D) image, such contents have been made into 3D contents and reproduced by a display apparatus capable of displaying a 3D image.

However, there is a shortage of high quality 3D contents since a large scale apparatus and development manpower are needed and high costs and amounts of time are taken in order to make such 3D contents.

Also, in even the case of 3D contents being currently provided, only the 3D contents having a preset quality are used, and 3D contents having a variety of qualities catering to users' tastes are not available.

### SUMMARY

Accordingly, one or more exemplary embodiments provide an apparatus and method capable of providing 3D contents having a variety of quality catering to user's tastes, and a computer-readable medium thereof.

According to an aspect of an exemplary embodiment, there is provided a method of converting 2D contents into 3D contents through a content converting apparatus, the method including: determining a quality of the 3D contents to be converted from the 2D contents that are video contents and include a plurality of frames; extracting an object from a frame among the plurality of frames; assigning depth to the extracted object; and performing rendering for conversion into the 3D contents on the frame having the object assigned with the depth, wherein at least one of the extracting the object, the assigning the depth and the performing the rendering is performed in accordance with the determined quality of the 3D contents.

At least one of the extracting the object, the assigning the depth and the performing the rendering may include: performing an automatic operation implemented according to preset reference information; and performing a manual operation implemented according to an input of a user, and the determining the quality of 3D contents includes determining a performance degree indicating a percentage of each of the manual operation and the automatic operation implemented in the corresponding at least one of the extracting the object, the assigning the depth and the performing the rendering.

The determining the performance degree may include selecting one among a plurality of quality modes classified in accordance with the performance degree.

The performing the manual operation may include displaying at least one graphic user interface (GUI) item selectively activated in accordance with the selected quality mode as a GUI item for receiving the input of the user in the manual operation.

At least one of the extracting the object and the assigning the depth may be performed according to information about contents and development of a scene in the frame to be processed.

The method may further include selecting a key frame among the plurality of frames, wherein the extracting the object and the assigning the depth are performed on the selected key frame, the method further including performing tracking on another frame other than the key frame among the plurality of frames.

The method may further include performing a 3D picture quality process on the rendered frame.

According to an aspect of another exemplary embodiment, there is provided an apparatus for converting 2D contents into 3D contents, the apparatus including: a converter which extracts an object with from a frame among a plurality of frames of the 2D contents that are video contents, assigns depth to the extracted object, and performs rendering for conversion into the 3D contents on the frame having the object assigned with the depth, wherein the converter determines a quality of the 3D contents and performs at least one of the extracting the object, the assigning the depth and the performing the rendering according to the determined quality of 3D contents.

The apparatus may further include a user input unit which receives an input of a user, wherein the converter performs an automatic operation based on preset reference information and a manual operation based on the input of the user to implement at least one of the extracting the object, the assigning the depth and the performing the rendering, and the converter determines the quality of the 3D contents by determining a performance degree indicating a percentage of each of the manual operation and the automatic operation implemented in the corresponding at least one of the extracting the object, the assigning the depth and the performing the rendering.

The converter may determine the performance degree by selecting one among a plurality of quality modes classified in accordance with the performance degree.

The converter may display at least one graphic user interface (GUI) item selectively activated in accordance with selected quality mode as a GUI item for receiving the input of the user in the manual operation.

The converter may perform at least one of the extracting the object and the assigning the depth according to information about contents and development of a scene in the frame to be processed.

The converter may select a key frame from among the plurality of frames, and performs the extracting the object and the assigning the depth on the selected key frame, and the converter may perform tracking on another frame other than the key frame from among the plurality of frames.

The converter may perform a 3D picture quality process on the rendered frame.

According to an aspect of another exemplary embodiment, there is provided a computer-readable storage medium having instructions executable by a computer, wherein the instructions perform a method of converting 2D contents into 3D contents when the instructions are implemented by a processor of the computer, the method including: determining a quality of the 3D contents to be converted from the 2D contents that are video contents and include a plurality of frames; extracting an object from a frame among the plurality of frames; assigning depth to the extracted object; and performing rendering for conversion into the 3D contents on the frame having the object assigned with the depth, wherein at least one of the extracting the object, the assigning the depth and the performing the rendering is performed in accordance with the determined quality of the 3D contents.

At least one of the extracting the object, the assigning the depth and the performing the rendering may include: performing an automatic operation implemented on the basis of preset reference information; and performing a manual process implemented on the basis of input of a user, and the determining the quality of 3D contents may include determining a performance degree indicating a percentage of each of the manual operation and the automatic operation implemented in the corresponding at least one of the extracting the object, the assigning the depth and the performing the rendering.

The determining the performance degree may include selecting one among a plurality of quality modes classified in accordance with the performance degree.

The performing the manual operation may include displaying at least one graphic user interface (GUI) item selectively activated in accordance with selected quality mode as a GUI item for receiving the input of the user in the manual operation.

At least one of the extracting the object and the assigning the depth may be performed according to information about contents and development of a scene in the frame to be processed.

The method may further include selecting a key frame from among the plurality of frames, the extracting the object and the assigning the depth may be performed on the selected key frame, and the method may further include performing tracking on another frame other than the key frame from among the plurality of frames.

The method may further include performing a 3D picture quality process on the rendered frame.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram showing a configuration of a content converting apparatus according to an exemplary embodiment;
FIG. 2 is a flowchart showing an operation of a content converting apparatus according to an exemplary embodiment;
FIG. 3 is a flowchart showing an operation of a content converting apparatus according to another exemplary embodiment;
FIG. 4 is a table showing an example of plural quality modes in a content converting apparatus according to an exemplary embodiment; and
FIG. 5 is a flowchart showing an operation of a content converting apparatus according to still another exemplary embodiment.

### DETAILED DESCRIPTION OF EXEMPLARY EMBODIMENTS

Below, exemplary embodiments will be described in detail with reference to accompanying drawings. Hereinafter, expressions such as "at least one of," when preceding a list of elements, modify the entire list of elements and do not modify the individual elements of the list.

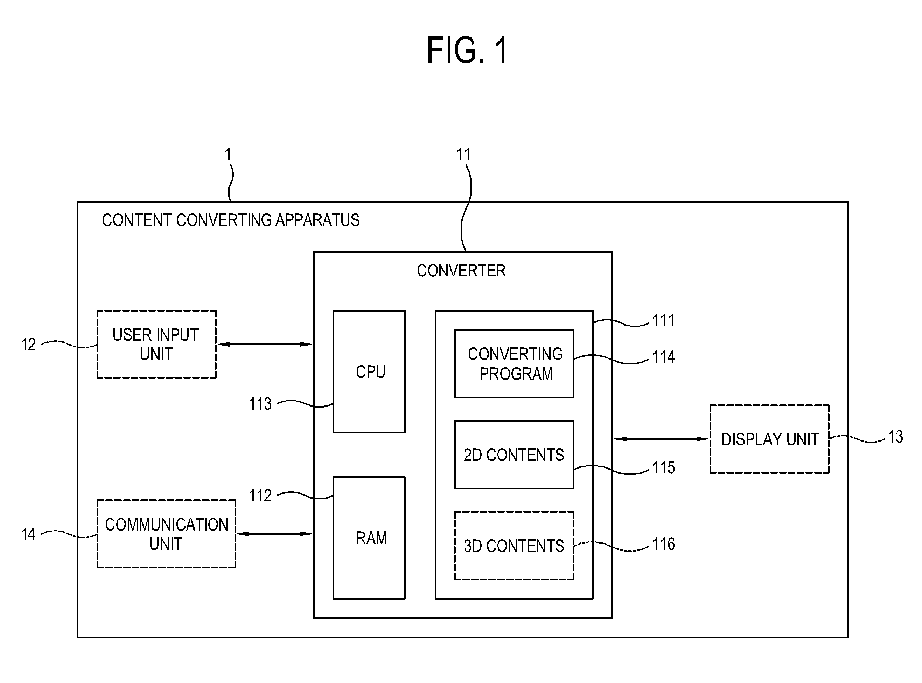

FIG. 1 is a block diagram showing a configuration of a content converting apparatus 1 according to an exemplary embodiment. The content converting apparatus 1 converts two-dimensional (2D) contents into three-dimensional (3D) contents. In the present exemplary embodiment, the contents include moving picture contents, for example, movies, dramas, sports, etc.

The content converting apparatus 1 may receive 2D contents to be converted into 3D contents from a predetermined 2D content provider (not shown). The content converting apparatus 1 may receive 2D contents from the 2D content provider through a predetermined network (not shown). For example, the 2D content provider may be a network server which stores 2D contents and transmits the 2D contents to the content converting apparatus 1 as requested by the content converting apparatus 1.

According to another exemplary embodiment, the content converting apparatus 1 may receive 2D content from the 2D content provider through a data transfer method or mechanism other than the network. For example, the 2D content provider may be a device provided with a storage unit such as a hard disk, a flash memory, etc., for storing 2D contents, which is locally connected to the content converting apparatus 1 and transmits 2D contents to the content converting apparatus 1 as requested by the content converting apparatus 1. In this case, there is no limit to a method of locally connecting the content converting apparatus 1 and the 2D content provider as long as the method is for transmitting data of 2D contents. For example, the local connection method may include universal serial bus (USB) or the like.

According to still another exemplary embodiment, the content converting apparatus 1 may receive 2D contents from a 3D content provider (not shown). For example, the 3D content provider may transmit 2D content to the content converting apparatus 1, receive 3D contents converted by the content converting apparatus 1, and provide the received 3D contents to a predetermined user terminal (not shown). The user terminal is capable of displaying 3D contents received from the content converting apparatus 1 as 3D image. For example, the user terminal may include a television (TV), a personal computer (PC), a smart phone, a smart pad, a PMP, an MP3 player, etc.

According to still another exemplary embodiment, the content converting apparatus 1 may transmit the converted 3D contents to the user terminal capable of displaying the 3D contents as a 3D image. For example, the content converting apparatus 1 may provide 3D contents to the user terminal through a network.

In the network according to the present exemplary embodiment, there is no limit to a network communication method such as a wired and/or wireless communication method as long as the method is for data communication to transmit at least one of 2D contents and 3D contents. The network communication method includes any known communication methods.

As shown in FIG. 1, the content converting apparatus 1 may include a converter 11 and a communication unit 14. The converter 11 converts 2D contents into 3D contents. The 2D contents include a plurality of video frames (hereinafter, referred to as a 'frame'). The 3D contents are based on a viewer's binocular parallax, which may include a plurality of left-eye frames and a plurality of right-eye frames. Among the plurality of left-eye frames and the plurality of right-eye frames, a pair including a left-eye frame and a right-eye frame may be respectively converted from at least one corresponding frame among the plurality of frames of the 2D contents. The conversion from 2D contents into 3D contents (hereinafter, referred to as '2D-3D conversion'), performed by the converter 11, will be described in detail below.

The communication unit 14 may perform at least one of data communication between the 2D content provider and the content converting apparatus 1, data communication between the 3D content provider and the content converting apparatus 1, and data communication between the user terminal and the content converting apparatus 1.

The converter 11 may include a storage unit 111, a random access memory (RAM) 112, and a central processing unit (CPU) 113. The storage unit 111 may store a converting program 114 for performing 2D-3D conversion, 2D contents 115 to be converted, and 3D contents 116 converted from 2D contents. The storage unit 111 may be achieved by a non-volatile memory such as a hard disk, a flash memory, etc. The RAM 112 is loaded with at least a part of the converting program 114 when the converter 11 operates, and the CPU 113 executes the converting program 114 loaded into the RAM 112. The converting program 114 has instructions executable by the CPU 113. The storage unit 111 is an example of a computer-readable storage medium.

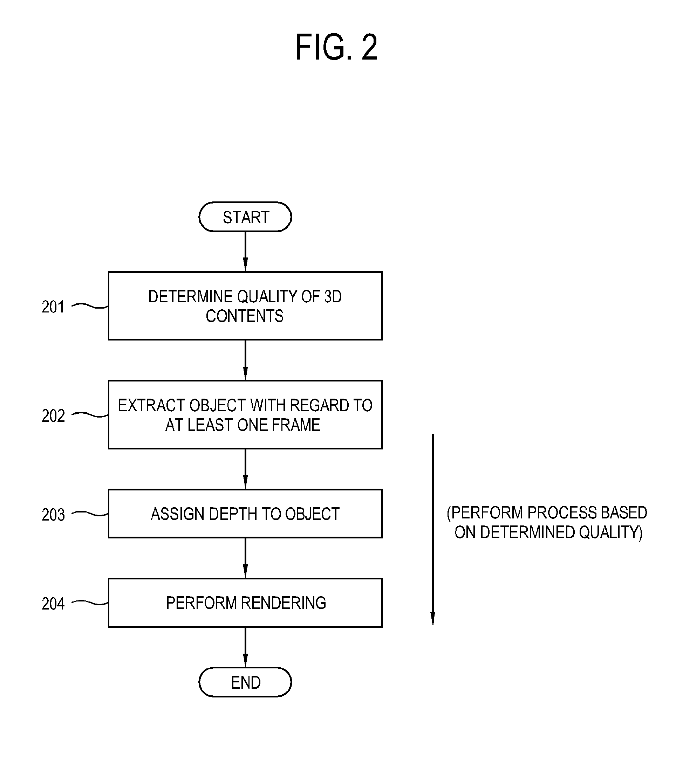

FIG. 2 is a flowchart showing an operation of a content converting apparatus 1 according to an exemplary embodiment. The operation (hereinafter, referred to as a '2D-3D converting process') of the content converting apparatus 1 may correspond to a content converting method performed by instructions of the converting program 114. In the present exemplary embodiment, the 2D-3D converting process may include a 3D-content quality determination operation 201, an object extraction operation 202, a depth assignment operation 203, and a rendering operation 204.

First, in the 3D-content quality determination operation 201, the quality of 3D contents to be converted is determined. In the present exemplary embodiment, the 2D-3D converting process may be performed in accordance with the quality of 3D contents. That is, at least one of the object extraction operation 202, the depth assignment operation 203, and the rendering operation 204 may be performed on the basis of the determined quality of 3D contents. The 3D-content quality determination operation 201 will be described below in more detail.

In the object extraction operation 202, an object to which a 3D effect will be reflected is extracted with regard to an image of the frame to be processed. The object may be a main image contained in the scene of each frame and, for example, may be an image of a main character in a scene where the main character appears, an image of a vehicle in a scene where a vehicle moves, etc. In the object extraction operation 202, an image of a corresponding frame is segmented so that a boundary of an object can be extracted from segmentation results.

In the depth assignment operation 203, depth is assigned to the object extracted by the object extraction operation 202. The depth is a parameter for realizing a 3D visual effect, which is used for shifting the object leftward and rightward by an assigned parameter in generated corresponding left-eye and right-eye frames. In the depth assignment operation 203, a previously given standardized template may be used for depth assignment.

In the rendering operation 204, image processing for a completed 3D image is performed with regard to the left-eye and right-eye frames resulting from the depth assignment operation 203. For example, the rendering operation 204 may include a process for filling a blank area generated as an object is shifted in an image of a frame (i.e., inpainting), etc.

Below, the 3D-content quality determination operation 201 will be described in detail. At least one operation among the 2D-3D converting process operation according to an exemplary embodiment may include a manual operation implemented in accordance with a user's input, and an automatic operation implemented in accordance with preset reference information. For example, in the object extraction operation 202, the depth assignment operation 203, or the like operations, some frames may be processed by manual operations while other frames may be processed by automatic operations.

In the manual operations, the converting process operations may be performed in accordance with an input of a user (or a developer of performing a content converting operation). The content converting apparatus 1 may further include a user input unit 12 such as a keyboard, a mouse, a tablet, etc., for the input of a user. Also, the content converting apparatus 1 may further include a display unit 13 such as a monitor or the like that displays an image being converted so that a user can observe a progression of the converting process. In order to receive a user's input effectively, the content converting apparatus 1 may display a graphic user interface (GUI, not shown) containing an image of a processed frame, a predetermined input menu, etc., on the display unit 13. A user may enter an input for the converting process through the input menu or the like of the GUI while ascertaining an image of a frame displayed on the display unit 13. For instance, a user may enter an input for extracting an object through the input menu or the like of the GUI while ascertaining the object contained in an image of a frame.

In the automatic operations, the operations are performed on the basis of the preset reference information. For example, in the object extraction operation 202, the content converting apparatus 1 may analyze an image of a frame and select an object, of which variation in a pixel value on a boundary of a certain object within the image is equal to or higher than a predetermined threshold value, as an object to be extracted. Here, the reference information may be a threshold value for the variation in the pixel value on the boundary of the object, by which the object can be selected to be extracted.

In a certain 2D-3D converting process, the quality of 3D contents may indicate how much percentage each of the manual operations and the automatic operations are. For example, in the object extraction operation 202, the manual operations and the automatic operations may each constitute half of the object extraction operation 202. The quality of 3D contents may be represented as a proportion (hereinafter, referred to as a 'combination proportion' or 'performance degree') of the automatic operations (or the manual operations) in the whole of a certain 2D-3D converting process operation.

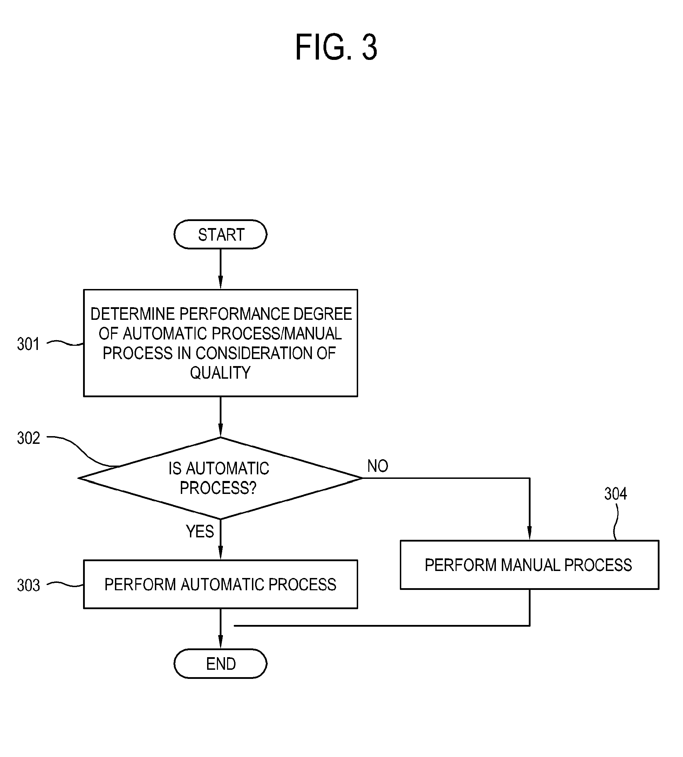

FIG. 3 is a flowchart showing an operation of a content converting apparatus 1 according to another exemplary embodiment. First, the content converting apparatus 1 determines the performance degree of the automatic operation (or the manual operation) in consideration of the quality of 3D contents at operation 301. Next, in a certain 2D-3D converting process, whether to perform the automatic operation or the manual operation is determined on the basis of the determined performance degree at operation 302. In operation 302, whether to perform the automatic operation or the manual operation may be determined per frame. If it is determined to perform the automatic operation, the corresponding 2D-3D converting process operation is performed by the automatic operation at operation 303. On the other hand, if it is determined to perform the manual operation, the corresponding 2D-3D converting process operation is performed by the manual operation at operation 304.

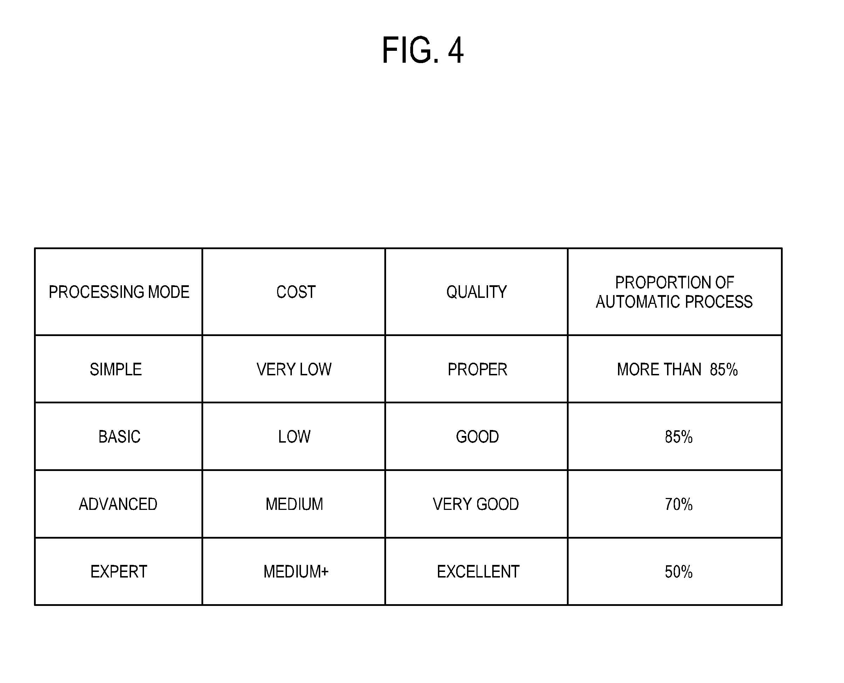

The quality of 3D contents may include a plurality of quality modes. Thus, the 2D-3D converting process may be performed corresponding to one selected among the plurality of quality modes. FIG. 4 is a table showing an example of plural quality modes in a content converting apparatus 1 according to an exemplary embodiment. As shown in FIG. 4, the plurality of quality modes may include a simple mode, a basic mode, an advanced mode and an expert mode in order of high quality. For example, these quality modes may have performance percentages of the automatic operations of more than 85%, 85%, 70% and 50%, respectively, in the whole corresponding operation. Also, the plurality of quality modes may correspond to costs in light of producing the 3D contents (refer to 'very low,' 'low,' 'medium' and `medium+' in the table of FIG. 4).

The quality of 3D contents may be determined in accordance with the kinds or formats of 2D contents. For example, if the 2D contents are recently released movies, relatively high quality may be determined for the 2D contents. On the other hand, if the 2D contents are old movies, relatively low quality may be determined for the 2D contents. According to another exemplary embodiment, if the movie is a grand scale blockbuster, relatively high quality may be determined for the movie. On the other hand, the relatively low quality may be determined for a story-oriented movie. According to still another exemplary embodiment, the quality of 3D contents may be determined in accordance with genres of contents such as sports, movies, drama, etc.

The quality of 3D contents may be determined in accordance with a user's input. The user's input for determining the quality of 3D contents may be received through the user input unit 12. In this case, a user may be, for example, a developer who develops the conversion of the corresponding contents. Alternatively, the display unit 13 may display an input menu as a GUI for determining the quality of 3D contents. For example, the input menu for determining the quality of 3D contents may include a pull-down menu having GUI items corresponding to a 'simple mode,' a 'basic mode,' a ' advanced mode,' and an 'expert mode,' respectively. If one is selected among the plural GUI items of the pull-down menu, only the GUI items having operations used for the selected quality mode may be activated among the plural GUI items included in the GUI input menu corresponding to each 2D-3D converting process, and GUI items corresponding to unnecessary operations may be inactivated.

Alternatively, the user's input for determining the quality of 3D contents may be received, via the communication unit 14, from another device, e.g., a user terminal (not shown), requesting the 3D contents to be converted. In this case, a user may be, for example, a user who requests the corresponding contents to be converted and uses the converted 3D contents.

As described above, according to an exemplary embodiment, 3D contents to be converted are provided with a variety of qualities, so that the contents having effective quality against costs can be provided while catering to user's various tastes.

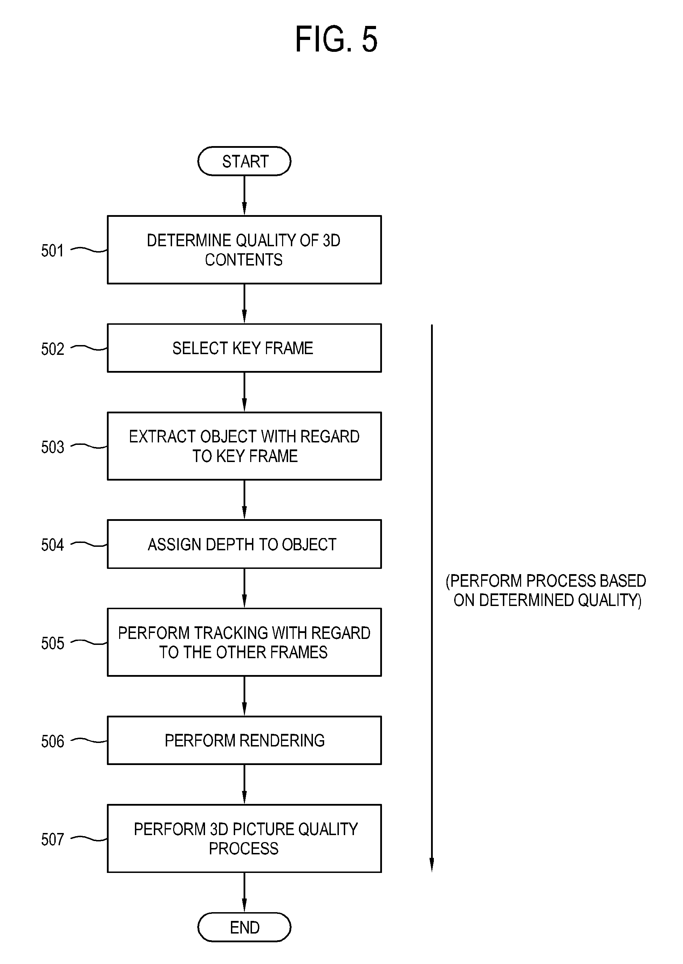

FIG. 5 is a flowchart showing an operation of a content converting apparatus 1 according to still another exemplary embodiment. Regarding the content converting apparatus 1 described with reference to FIG. 5, the same or similar configurations as the content converting apparatus 1 described with reference to FIGS. 1 to 3 will be omitted.

The 2D-3D converting process operations in the present exemplary embodiment may include a 3D-content quality determination operation 501, a key frame selection operation 502, an object extraction operation 503, a depth assignment operation 504, a tracking operation 505, a rendering operation 506 and a 3D picture quality operation 507.

In the 3D-content quality determination operation 501, the quality of 3D contents to be converted is determined. As the key frame, a frame representing contents of an image may be selected among the plural frames of the 2D contents. For example, the key frame may include a frame where a scene is switched, a frame where a main character of a scene is closed up, etc. The key frame may be selected on the basis of motion of an image in the corresponding frame. For example, a frame of which motion of an image is equal to or higher than a predetermined value may be selected as the key frame.

In the object extraction operation 503, an object to which a 3D effect will be reflected is extracted with regard to the selected key frame. In the depth assignment operation 504, depth is assigned to the object extracted in the object extraction operation 503.

In the tracking operation 505, a left-eye frame and a right-eye frame are generated corresponding to other frames other than the key frame. The tracking 505 may be performed with reference to the object extraction operation 503 and the depth assignment operation 504 performed for the key frame 302. As described above, the object extraction operation 503 and the depth assignment operation 504 are performed for an important key frame and the tracking is performed for the other frames with reference to the key frame, so that the converting process is effective in cost and time can be performed while keeping high quality.

In the rendering operation 506, image processing for a completed 3D image is performed with regard to the left-eye and right-eye frames resulting from the depth assignment operation 504 and the tracking operation 505.

In the 3D picture quality operation 507, the 3D picture quality process is performed with regard to the frames resulting from the rendering operation 506. The 3D picture quality operation 507 may include at least one of contrast enhancement, detail enhancement, etc. Through the 3D picture quality operation 507, improvement of picture quality can be achieved when the 3D contents are actually displayed, so that the picture quality can be optimized to a display apparatus.

In addition, according to the present exemplary embodiment, at least one of the 2D-3D converting process operation may be performed on the basis of information about contents and developments of a scene of a frame to be processed (hereinafter, referred to as 'storytelling information'). The storytelling information is information to be used in realizing 3D visual effects corresponding to story development of contents in accordance with an intention of a content producer. In the present exemplary embodiment, the object extraction operation 503, the depth assignment operation 504, or the like operations may be performed on the basis of the storytelling information. As an example of using the storytelling information, in a scene where two characters have a dialogue with each other, if another main character passes behind the two characters, this main character may be extracted as an object of a corresponding frame, or depth may be fully applied to the extracted object of this main character. In this example, the storytelling information may include information about an image of another main character to extract an object, or a vale representing an importance degree on story development to assign the depth, etc., which may be previously provided corresponding to a relevant frame and stored in the storage unit 111. The converter 11 may perform an operation with reference to the storytelling information stored in the storage unit 111.

As described above, it is possible to provide 3D contents having a variety of qualities catering to users' tastes.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units of the content converting apparatus 1 can include a processor or microprocessor executing a computer program stored in a computer-readable medium.

Although a few exemplary embodiments have been shown and described, it will be appreciated by those skilled in the art that changes may be made in these exemplary embodiments without departing from the principles of the inventive concept, the scope of which is defined in the appended claims. For example, in the foregoing exemplary embodiments, the quality of 3D contents varies with regard to the operations such as the object extraction operation 202, the depth assignment operation 203, etc., although another exemplary embodiment is not limited thereto. For example, according to one or more other exemplary embodiments, different operations such as the key frame selection operation 502, the rendering operation 506, etc., may be performed in accordance with the quality of 3D contents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of converting two-dimensional (2D) contents into three-dimensional (3D) contents through a content converting apparatus, the method comprising:
determining a quality of 3D contents converted from 2D contents that are video contents and comprise a plurality of frames;
extracting an object from a frame among the plurality of frames;
assigning depth to the extracted object; and
performing rendering for conversion into 3D contents on the frame having the object assigned with the depth,
wherein at least one of the extracting the object, the assigning the depth and the performing the rendering is performed in accordance with the determined quality of the 3D contents.

2. The method according to claim 1, wherein at least one of the extracting the object, the assigning the depth and the performing the rendering comprises:
performing an automatic process implemented according to preset reference information; and
performing a manual process implemented according to an input of a user, and
the determining the quality of 3D contents comprises determining a performance degree indicating a percentage of each of the manual process and the automatic process implemented in the corresponding at least one of the extracting the object, the assigning the depth and the performing the rendering.

3. The method according to claim 2, wherein the determining the performance degree comprises selecting one among a plurality of quality modes classified in accordance with the performance degree.

4. The method according to claim 3, wherein the performing the manual process comprises displaying at least one graphic user interface (GUI) item selectively activated in accordance with selected quality mode as a GUI item for receiving the input of the user in the manual process.

5. The method according to one of claims 1 to 4, wherein at least one of the extracting the object and the assigning the depth is performed according to information about contents and development of a scene in the frame to be processed.

6. The method according to one of claims 1 to 5, further comprising selecting a key frame among the plurality of frames,
wherein the extracting the object and the assigning the depth are performed on the selected key frame,
the method further comprising performing tracking on another frame, other than the key frame, among the plurality of frames.

7. The method according to one of claims 1 to 6, further comprising performing a 3D picture quality process on the plurality of frames on which the rendering is performed.

8. An apparatus for converting 2D contents into 3D contents, the apparatus comprising: a converter which extracts an object from a frame among a plurality of frames of 2D contents that are video contents, assigns depth to the extracted object, and performs rendering for conversion into 3D contents on the frame having the object assigned with the depth,
wherein the converter determines a quality of the 3D contents and performs at least one of extracting the object, assigning the depth and performing the rendering according to the determined quality of the 3D contents.

9. The apparatus according to claim 8, further comprising a user input unit to receive an input of a user,
wherein the converter performs an automatic process based on preset reference information and a manual process based on the input of the user to implement at least one of the extracting the object, the assigning the depth and the performing the rendering, and
wherein the converter determines the quality of the 3D contents by determining a performance degree indicating a percentage of each of the manual process and the automatic process implemented in the corresponding at least one of the extracting the object, the assigning the depth and the performing the rendering.

10. The apparatus according to claim 9, wherein the converter determines the performance degree by selecting one among a plurality of quality modes classified in accordance with the performance degree.

11. The apparatus according to claim 10, wherein the converter displays at least one graphic user interface (GUI) item selectively activated in accordance with selected quality mode as a GUI item for receiving the input of the user in the manual process.

12. The apparatus according to one of claims 8 to 11, wherein the converter performs at least one of the extracting the object and the assigning the depth according to information about contents and development of a scene in the frame to be processed.

13. The apparatus according to one of claims 8 to 12, wherein the converter selects a key frame among the plurality of frames, and performs the extracting the object and the assigning the depth on the selected key frame, and
wherein the converter performs tracking on another frame other than the key frame among the plurality of frames.

14. The apparatus according to one of claims 8 to 13, wherein the converter performs a 3D picture quality process on the plurality of frames on which the rendering is performed.
